**Europäisches Patentamt**

(19) **European Patent Office**

**Office européen des brevets**

(11) Publication number: **0 030 120 B2**

## (12) NEW EUROPEAN PATENT SPECIFICATION

(45) Date of publication of the new patent specification : **03.04.91 Bulletin 91/14**

(51) Int. Cl.⁵ : **F16H 1/38, B60K 17/34, B60K 5/04**

(21) Application number : **80304241.5**

(22) Date of filing : **26.11.80**

(54) Transmission apparatus for four-wheel drive motor vehicle.

(30) Priority : **29.11.79 JP 154624/79**

(43) Date of publication of application : **10.06.81 Bulletin 81/23**

(45) Publication of the grant of the patent : **02.01.85 Bulletin 85/01**

(45) Mention of the opposition decision : **03.04.91 Bulletin 91/14**

(84) Designated Contracting States : **CH FR IT LI SE**

(56) References cited :
DE-C- 801 249
DE-C- 1 455 885
DE-C- 3 044 712
FR-A- 2 185 285

(56) References cited :
GB-A- 887 849
US-A- 3 400 777
US-A- 3 470 766
US-A- 3 848 691

(73) Proprietor : **FUJI JUKOGYO KABUSHIKI KAISHA**
**7-2 Nishishinjuku 1-chome Shinjuku-ku Tokyo (JP)**

(72) Inventor : **Kodama, Masayuki**
**940-181, Utsugimachi**
**Hachioji-shi Tokyo (JP)**
Inventor : **Makishima, Sadao**
**725, Nobe**
**Akigawa-shi Tokyo (JP)**

(74) Representative : **Kirk, Geoffrey Thomas et al**
**BATCHELLOR, KIRK & CO. 2 Pear Tree Court Farringdon Road**
**London EC1R 0DS (GB)**

EP 0 030 120 B2

## Description

The present invention relates to a transmission apparatus for a motor vehicle in which the engine is transversely disposed in the front or rear of the vehicle and the output of the engine is selectively transmitted to the front and rear axles of the vehicle through the transmission.

In a four-wheel drive vehicle, a propeller shaft must be provided for transmitting the output of the engine to the axle of the other end of the vehicle. The propeller shaft should be disposed along the longitudinal centre line of the vehicle. If the propeller shaft deviates from the centre line, the differential for the axle also deviates. As a result, right and left portions of the axle are different in length from the differential. U.S. Patent Specification No. 3,400,777 shows an example of such a construction.

GB-A-887849 shows a further transmission apparatus in which the output of an engine is selectively transmitted to the front and rear axles. The sole figure shows a transmission apparatus for a motor vehicle having an internal combustion engine transversely disposed in said vehicle, a transmission which is also transversely disposed and connected to a crankshaft of said engine through a first clutch, a final reduction gear operatively connected to said transmission, a differential having a rotatable casing secured to one side of said final reduction gear so as to be disposed adjacent a longitudinal centreline of said motor vehicle, and axles connected to the differential, a transfer device including a first bevel gear engaged with a second bevel gear and connected to said final reduction gear for selectively transmitting the output of said transmission to other axles via a second clutch slidably mounted on a shaft and a propeller shaft and disposed adjacent said differential, said propeller shaft is connected to said other axles so as to provide four-wheel drive, and is disposed substantially longitudinally along the centreline of the vehicle. The second clutch is a shaft clutch working in the direction of the propeller shaft to selectively connect the propeller shaft to the other shaft on which the one bevel gear is fixed while the other bevel gear is affixed to the rotatable casing of the differential.

The invention seeks to further develop and to simplify the before-mentioned transmission apparatus in which propeller shaft may be disposed along the longitudinal centre line of the vehicles. According to the present invention, there is provided a transmission apparatus for a motor vehicle having an internal combustion engine tranversely disposed in said vehicles, as defined in claim 1.

Other objects and features of the present invention will become apparent from the following description of a preferred embodiment with reference to the accompanying drawings.

Figure 1 is a sectional view of an embodiment of the present invention ;

Figure 2 is a schematic illustration of the apparatus of Figure 1 ; and

Figure 3 is a schematic illustration of another embodiment of the present invention.

Referring to the drawings, numeral 1 designates an engine transversely provided in a vehicle at the front end thereof, a transmission 4 is disposed in alignment with a crankshaft 5 of the engine. A main drive shaft 8 of the transmission 4 is rotatably supported by bearings 6 and 7 and is adapted to be coupled to the engine through a clutch 2. The clutch 2 comprises, as well known, a flywheel 9 secured to the crankshaft 5, a diaphragm spring 10, a pressure plate 11, a clutch disc 12 having a facing 13, a release arm 14, and a release bearing 15.

A sub-drive shaft 16 is disposed in parallel with the main drive shaft 8, supported by bearings 17 and 18. The main drive shaft 8 has a gear 19 for the fourth speed, a gear 20 for the third speed, a gear 21 for the second speed and a gear 22 for the first speed. On the sub-drive shaft 16, bears 23, 24, 25 and 26, respectively engaged with gears 19 to 22, are rotatably mounted. Between the gears 23 and 24, a synchromesh device 27 is provided for coupling the gear 23 or 24 to the sub-drive shaft 16 for the fourth and third speeds. A synchromesh device 28 is similarly provided between the gears 25 and 26 for the second and first speeds. Further, a gear 29, a gear 31 provided on the sleeve 30 of the synchromesh device 28 and an idler gear 32 are provided for the reverse drive.

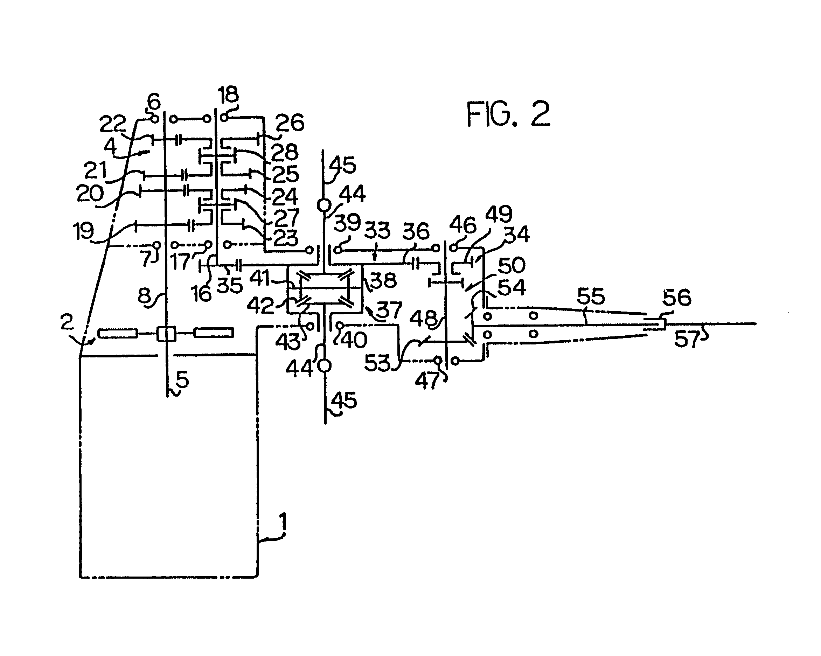

In this apparatus, the output of the transmission is transmitted from an output gear 35 secured to the inner end of the sub-drive shaft 16 to a final reduction device 33 and to a transfer device 34. The output gear 35 engages with a final reduction gear 36 secured to a differential case 38 of a differential 37. The differential comprises a shaft 41, pinions 42 and side gears 43 (Fig. 2) each of which has an output shaft 44. Each shaft 44 is connected to a front axle 45 through a joint. The differential is positioned at the inner side of the final reduction gear, so that the differential may be located in a central point of the tread of the vehicle.

The final reduction gear 36 engages with a gear 49 of the transfer device 34. The gear 49 is rotatably mounted on a shaft 48 transversely provided and supported by bearings 46 and 47 at both ends. The transfer device 34 comprises a clutch 50 which comprises a clutch hub 51 a engaged with the shaft 48 by splines, a sleeve 51 slidably engaged with the clutch hub 51 a by splines, and splines 52 provided on the side of gear 49. The sleeve 51 is shifted by a shift lever (not shown) for engaging splines of the sleeve with the splines 52 thereby to couple the gear 49 to the shaft 48. A bevel gear 53 is secured to the shaft 48 at the end of the shaft and engages with the bevel gear 54 secured to a drive shaft 55 linked to a coaxial propeller shaft 57 which is longitudinally disposed along the center line of the vehicle. The clutch 50 and a pair of bevel gears 53 and 54 are disposed on the same side as the differential in relation to the final reduction gear, and further the gear 49, clutch 50 and bevel gear 54 are closely positioned relative to each other.

Therefore, the drive shaft 55 and propeller shaft 57 may be disposed along the center line of the vehicle.

In operation, the output of the engine 1 is transmitted to the main drive shaft 8 of the transmission 4 through the clutch 2 and further to the sub-drive shaft 16 by the engagement of the synchromesh device 27 or 28. The output of the transmission 4 at the output gear 35 is transmitted to the front axle 45 through the final reduction gear 36 and differential 37 and also to the transfer gear 49. When the sleeve 51 of the clutch 50 is engaged with the splines 52 by manipulating the shift lever, the rotation of the gear 49 is transmitted to the shaft 48 through the clutch hub 51a. Thus, the output of the transmission is transmitted to the drive shaft 55 and propeller shaft 57 through the bevel gears 53, 54 and to the rear axle. Thus, the vehicle is driven by four-wheel drive.

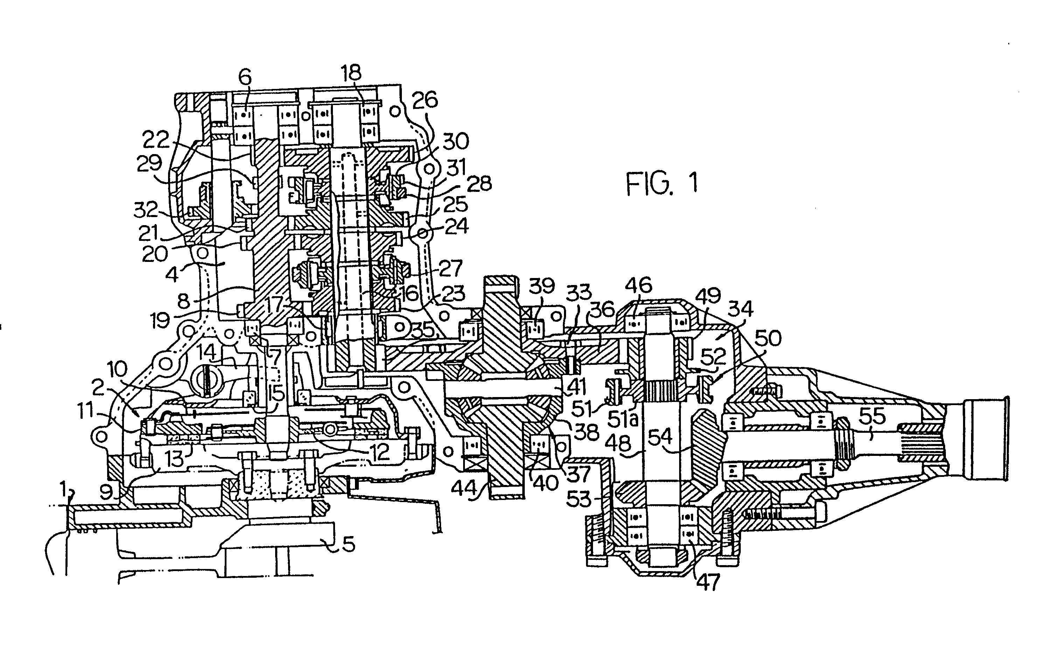

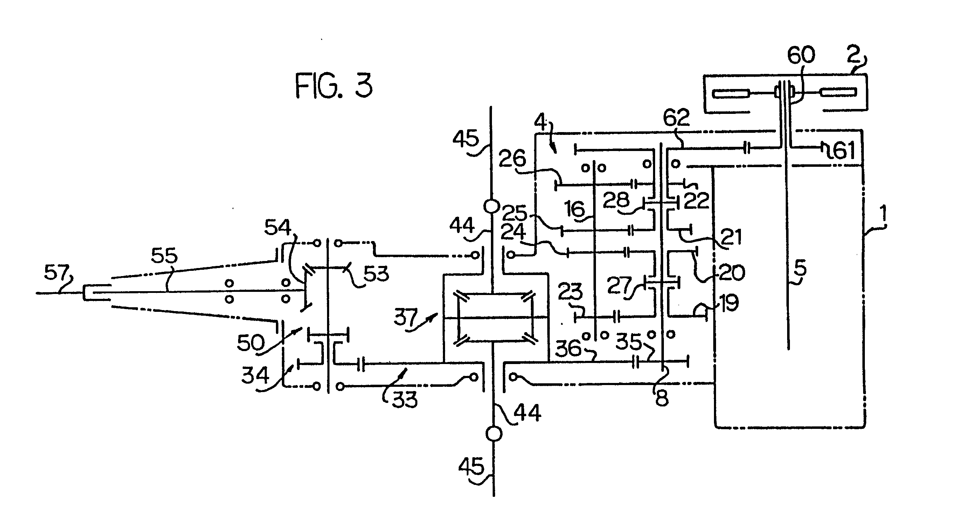

Referring to Figure 3 showing another embodiment of the present invention, the transmission 4 is disposed in parallel to the engine 1. An output shaft 60 of the clutch 2 is tubular and co-axial with the crankshaft 5 of the engine 1. A gear 61 secured to the shaft 60 engages with a fear 62 rotatably mounted on the main drive shaft 8 of the transmission 4. The gear 22 for the first speed is secured to the gear 62. The gear 21 for the second speed, gear 20 for the third speed and gear 19 for the fourth speed are rotatably mounted on the shaft, respectively. Gears 23 to 26 respectively engaged with gears 19 to 22 are secured to the sub-drive shaft 16. The output gear 35 is secured to the main drive shaft 8, which engages with the final reduction gear 36. The differential 37 is secured to the inner side of the final reduction gear 36 so that the differential is disposed at a central position of the vehicle. The construction of the transfer device 34 and other devices is the same as in the first embodiment of Figures 1 and 2, and hence the propeller shaft 57 is disposed along the center line of the vehicle.

The output of the engine 1 is transmitted to the sub-drive shaft through the clutch 2, shaft 60, gears 61, 62 and gears 22 to 26. The output at the output gear 35 is transmitted to the front axle 45 through the final reduction gear 36 and differential 37 and also selectively to the rear axle through the transfer device 34, clutch 50, bevel gears 53 and 54 and propeller shaft 57.

In accordance with the present invention, the transfer device for the four-wheel drive is disposed adjacent the differential for the two-wheel drive, which is disposed at a central position of the vehicle. Accordingly, the propeller shaft for the four-wheel drive is disposed along the center line of the vehicle.

## Claims

1. A transmission apparatus for a motor vehicle having an internal combustion engine (1) transversely disposed in said vehicle, a transmission (4) which is also transversely disposed and connected to a crankshaft (5) of said engine through a first clutch (2), a final reduction gear (36) operatively connected to said transmission, a differential (37) having a rotatable casing (38) secured to one side of said final reduction gear so as to be disposed adjacent a longitudinal centreline of said motor vehicle, and axles (45) connected to the differential, a transfer device (34) including a first bevel gear (53) engaged with a second bevel gear (54) and connected to said final reduction gear for selectively transmitting the output of said transmission to other axles via a second clutch (50) slidably mounted on a shaft (48) and a propeller shaft (57) and disposed adjacent said differential, said propeller shaft (57) is connected to said other axles so as to provide four-wheel drive, and is disposed substantially longidutinally along the centreline of the vehicle,
characterised in that
said shaft of the transfer device (34) is a transversely disposed supporting shaft (48), a gear (49) is rotatably mounted on said supporting shaft and engaged with the final reduction gear (36), said second clutch (50) is slidably mounted on the supporting shaft so as to operatively couple the gear (49) with the supporting shaft, said first bevel gear (53) is secured to the supporting shaft ; and
said propeller shaft (57) is connected to said second bevel gear.

2. A transmission apparatus for a motor vehicle according to claim 1, wherein said supporting shaft (48) of said transfer means is rotatably supported by bearings (46, 47) at each end, said first bevel gear (53) is secured to an end portion of said supporting shaft, and said second bevel gear (54) is disposed adjacent said second clutch, whereby said propeller shaft is disposed along said centre line of said vehicle.

## Ansprüche

1. Getriebe für ein Motorfahrzeug, mit einem in dem Fahrzeug quer angeordneten Verbrennungsmotor (1), einem ebenfalls quer angeordneten Wechselgetriebe (4), das über eine erste Kupplung (2) mit einer Kurbelwelle (5) des Motors verbunden ist, einem Enduntersetzungszahnrad (36), das mit dem Wechselgetriebe antriebsmäßig verbunden ist, einem Differential (37) mit einem drehbaren Gehäuse (38), das an einer Seite des Enduntersetzungszahnrades angebracht und nahe einer Längsmittellinie des Motorfahrzeugs angeordnet ist, und an das Differential angeschlossenen Achsen (45), einem Vorgelege (34) mit einem ersten Kegelzahnrad (53), das mit einem zweiten Kegelzahnrad (54) in Eingriff ist und an das genannte Enduntersetzungszahnrad angeschlossen ist, um die Ausgangsleistung des genannten Wechselgetriebes über eine auf einer Welle (48) und einer Kardanwelle (57) gleitbar angebrachte, neben dem genannten Differential angeordnete zweite Kupplung (50) wahlweise auf andere Achsen zu übertragen, wobei die genannte Kardanwelle (57) zur Schaffung eines Vierradantriebs an die genannten anderen Achsen angeschlossen ist und im wesentlichen in Längsrichtung längs der Mittellinie des Fahrzeugs angeordnet ist, dadurch gekennzeichnet, daß die Welle des Vorgeleges (34) eine quer angeordnete Stützwelle (48) ist, ein Zahnrad (49) auf der genannten Stützwelle drehbar angebracht ist und mit dem Enduntersetzungszahnrad (36) in Eingriff ist, auf der Stützwelle zur antriebsmäßigen Kupplung des Zahnrads (49) mit der Stützwelle die genannte zweite Kupplung (50) gleitbar angebracht ist, auf der Stützwelle das genannte erste Kegelrad (53) fest angebracht ist, und die genannte Kardanwelle (57) mit dem genannten zweiten Kegelrad verbunden ist.

2. Getriebe für ein Motorfahrzeug nach Anspruch 1, bei dem die Stützwelle (48) des Vorgeleges an jedem Ende durch Lager (46, 47) drehbar gelagert ist, das erste Kegelrad (53) an einem Endteil der Stützwelle befestigt ist und das zweite Kegelrad (54) neben der zweiten Kupplung angeordnet ist, wodurch die Kardanwelle längs der genannten Mittellinie des Fahrzeugs angeordnet ist.

## Revendications

1. Mécanisme de transmission pour un véhicule automobile ayant un moteur à combustion interne (1) disposé transversalement dans ledit véhicule, qui comprend un mécanisme de transmission (4) qui est aussi disposé transversalement et relié à un vilebrequin (5) du moteur par un premier embrayage (2), un pignon réducteur final (36) fonctionnellement relié à la transmission, un différentiel (37) ayant un carter rotatif (38) fixé à l'un des côtés dudit pignon réducteur final (36) et occupant une position voisine de l'axe longitudinal dudit véhicule, des essieux (45) reliés au différentiel (37), un dispositif de transfert (34) incluant un premier pignon conique (53) coopérant avec un second pignon conique (54) et relié au pignon réducteur final (36) pour sélectivement transmettre l'énergie de cette transmission aux essieux à travers un second embrayage (50) monté glissant sur un arbre de support (48) et sur un arbre de propulsion (57) et disposé adjacent audit différentiel, ledit arbre de propulsion (57) étant relié auxdits essieux afin de réaliser une propulsion par quatre roues et disposé sensiblement longitudinalement le long de l'axe longitudinal du véhicule, caractérisé en ce que l'arbre du dispositif de transfert (34) est un arbre de support (48) disposé transversalement, un pignon 49 étant monté tournant sur cet arbre de support et coopérant avec le pignon réducteur final (36), ledit second embrayage (50) étant monté glissant sur l'arbre de support de manière à opérativement coupler le pignon (49) avec l'arbre de support, ledit premier pignon conique (53) étant fixé à l'arbre de support et, ledit arbre de propulsion étant relié audit second pignon conique.

2. Mécanisme de transmission pour un véhicule automobile selon la revendication 1, caractérisé en ce que ledit arbre de support (48) desdits moyens de transfert est supporté, à chaque extrémité, par un palier (46, 47), ledit pignon conique (53) étant fixé à une partie d'extrémité dudit arbre de support, tandis que le second pignon conique (54) est disposé près du second embrayage, ce qui fait que ledit arbre de propulsion est disposé le long de la ligne médiane dudit véhicule.

FIG. 1

FIG. 2

FIG. 3

EP 0 030 120 B2